# EUROPÄISCHE PATENTSCHRIFT

(11) **EP 1 386 063 B1**
(45) Veröffentlichungstag und Bekanntmachung des Hinweises auf die Patenterteilung: **18.10.2006**
(21) Anmeldenummer: 02730228.0
(22) Anmeldetag: 30.04.2002
(51) Int. Cl.: F01M 1/08, F16N 13/02

(54) **SCHMIERPUMPENAGGREGAT**
LUBRICANT PUMP UNIT
ORGANE DE POMPE DE LUBRIFICATION

(30) Priorität: 07.05.2001 DE 20107681 U
(43) Veröffentlichungstag der Anmeldung: 04.02.2004
(73) Patentinhaber: Willy Vogel Aktiengesellschaft, 12277 Berlin (DE)
(72) Erfinder: HESS, Dieter, W., 67245 Lambsheim (DE); RUITER, Jan, 68723 Schwetzingen (DE)
(74) Vertreter: Grünecker, Kinkeldey, Stockmair & Schwanhäusser Anwaltssozietät
(86) Internationale Anmeldenummer: PCT/EP2002/004775
(87) Internationale Veröffentlichungsnummer: WO 2002/090729

(56) Entgegenhaltungen:
- CH-A- 673 506
- DE-A- 4 230 106
- DE-A- 19 959 300
- DE-U- 29 814 040
- FR-A- 965 594

## Beschreibung

Die Erfindung betrifft ein Schmierpumpenaggregat der im Oberbegriff des Anspruchs 1 angegebenen Art.

In dem aus CH 673 506 A bekannten Schmierpumpenaggregat wird der Arbeitskolben nur im Fördertakt hydraulisch beaufschlagt. Der Rückstellhub des Arbeitskolbens wird durch eine Rückstellfeder bewirkt. Die Dosierkolben werden in Förderrichtung vom Arbeitskolben verschoben, für die Saughübe sind Rückstellfedern vorgesehen. Die Dosierzylinder saugen das Schmieröl über Einlassventile aus einer an einen Hochtank angeschlossenen Ringkammer an. Zur Funktionsüberwachung wird die Position des Arbeitskolbens abgetastet. Zusätzlich sind zumindest einzelnen Schmierstellenanschlüssen optische/elektrische Funktionsüberwachungen zugeordnet. Die Dosierung wird mechanisch durch einen einstellbaren Anschlag für den unteren Totpunkt des Arbeitskolbenhubs bestimmt. Die Zeit und der Verlauf des Rückstellhubs des Arbeitskolbens und der Dosierkolben hängen von der Funktion der Rückstellfedern ab. Dies erschwert das Einsteuern einer hohen Schmiertaktfrequenz, da die Bewegungswiderstände des Arbeitskolbens und der Dosierkolben durch äußere Einflüsse, z.B. Verschleiß oder dgl., variieren und die Rückstellfedern individuell ermüden. Für schnelle Rückstellhübe werden progressive Rückstellfedern mit steiler Kennlinie benutzt, die am Ende des Förderhubs ihren größten Widerstand leisten, gerade wenn der Förderhub dynamisch abzuschließen wäre. Dies begrenzt die Schmierdynamik erheblich, und ist mit erheblichem Leistungsverlust verbunden.

Bei dem aus dem Datenblatt L/9378-6.2/05 99 der Firma MAN-B & W bekannten Schmierpumpenaggregat sind die Dosierkolben achsparallel zum Arbeitskolben und hinter diesem gruppiert. Das den Arbeitskolben enthaltende Gehäuse weist Endverschraubungen und einen Kontrollsensor auf, so dass zu einer Reparatur oder zur Wartung für das Lösen der Verbindungen erheblicher Arbeitsaufwand erforderlich ist. Für den Arbeitskolben und die Dosierkolben ist ein gemeinsamer Ölkreis mit einem an das Gehäuse angeflanschten Magnetventil vorgesehen. Der Arbeitskolben wird ausschließlich beim Förderhub hydraulisch druckbeaufschlagt, während den Rückstellhub eine starke Rückstellfeder vornimmt. Die Dosierkolben sind in den Arbeitskolben eingehängt. Variierende Bewegungswiderstände des Arbeitskolbens und der Dosierkolben, Reibungskräfte an der Rückstellfeder und die unkontrollierbare Ermüdung der Rückstellfeder beeinflussen die Zeit und den Verlauf des Rückstellhubes in nicht kontrollierbarer Weise, und stellen eine mechanische Begrenzung für eine unter bestimmten Betriebsbedingungen des Verbrennungsmotors nötige, hohe Schmiertaktfrequenz bzw. Schmierdynamik dar. Der gemeinsame Ölkreis ist nachteilig, weil das für die Schmierung bestimmte, meist hochviskose Öl mindere Qualität und oft eine beträchtliche Schmutzfracht hat, was den Verschleiß an den bewegten Komponenten erhöht und die Schmierdynamik dämpft.

Der Erfindung liegt die Aufgabe zugrunde, ein Schmierpumpenaggregat der eingangs genannten Art zu schaffen, das baulich einfach, und wartungsfreundlich ist und eine präzise Steuerung der Schmiertaktfrequenz bis zu sehr hoher Schmiertaktfrequenz ermöglicht.

Die gestellte Aufgabe wird mit den Merkmalen des Anspruchs 1 gelöst.

Da der Arbeitskolben in beiden Hubrichtungen hydraulisch beaufschlagt wird, ist die Zeitdauer oder der zeitliche Ablauf auch des Rückstelltaktes exakt steuerbar. Der Einfluss variierender Bewegungswiderstände der Dosierkolben und des Arbeitskolbens auf die Zeitdauer des Rückstelltaktes ist minimiert. Das Pumpenaggregat kann problemlos und über lange Standzeiten auch mit hoher Schmiertaktfrequenz bzw. hoher Schmierdynamik betrieben werden. Durch den Wegfall von Rückstellfedern ist die Betriebssicherheit des Pumpenaggregats erhöht, werden Leistungsverluste minimiert, ist der Schmierablauf präzise steuerbar, und lässt sich eine kompakte Bauform erzielen. Die ausschließlich hydraulische Betätigung des Arbeitskolbens bietet den Vorteil, über den Hydraulikdruck die Betätigungskraft für den Arbeitskolben nach Bedarf einzustellen, ohne mechanisch in das Pumpenaggregat eingreifen zu müssen.

Zur weiteren Erhöhung der Betriebssicherheit sind für den Arbeitskolben hydraulische Hubendlagen-Dämpfvorrichtungen vorgesehen. Daraus resultiert auch ein geringes Laufgeräusch.

Zur Bewegungssteuerung des Arbeitskolbens dient ein Umsteuerventil, vorzugsweise ein 4/2-Wege-Richtungssteuerventil, das störungsunanfällig ist und eine präzise Taktung des Pumpenaggregats ermöglicht, auch bei hoher Schmiertaktfrequenz.

Baulich einfach ist das Steuerventil durch einen Schaltmagneten gegen Federkraft verstellbar, so dass es unter der Federkraft wieder zurückverstellt wird.

Zweckmäßiger kann es sein, beide Steuerstellungen des Steuerventils durch Schaltmagneten einzustellen, damit sowohl der Förderhub als auch der Rückstellhub zeitlich exakt einstellbar sind.

Zweckmäßig sind die Dämpfvorrichtungen durch jeweils zwei Komponenten gebildet, deren eine stationär und deren andere am Arbeitskolben angeordnet ist. Günstig ist z.B. ein Eintauchvorsprung am Arbeitskolben und eine Eintauchvertiefung im Gehäuse. Am Hubende wird das Steueröl zwischen dem Eintauchvorsprung und der Eintauchvertiefung komprimiert, so dass sich eine rasche Verzögerung des Arbeitskolbens ohne Anschlag erzielen lässt.

Im Hinblick auf eine kompakte Bauweise ist zumindest eine der Komponenten der Dämpfvorrichtung gleichzeitig ein einstellbarer Hubendanschlag für den Arbeitskolben, vorzugsweise eine hohle, verschraubbare Hülse. So ermöglicht die Hülse die stufenlose Verstellung der Dosierung. Alternativ könnte auch eine Anschlaghülse benutzt werden, die eine stufenweise Änderung der Dosierung ermöglicht.

Eine Blende in der Hülse lässt den Verlauf z.B. des Förderhubs hydraulisch beeinflussen.

Im Hinblick auf Wartungsfreundlichkeit und rationelle Fertigung bildet das Gehäuse mit den darin untergebrachten, aktiven Komponenten eine vorfertigbare, einfach entfernbare Baueinheit ohne Endverschraubungen zu weiteren Verrohrungen, sozusagen das Kernstück des Pumpenaggregats.

Durch die Position des Arbeitskolbens in der Mitte der Gruppe der Dosierkolben, und innerhalb im Wesentlichen gleicher axialer Höhe, ergibt sich eine kompakte Bauform und reduzieren sich die zu bewegenden Massen. Dies kommt der Schmierdynamik zugute.

Die Baueinheit lässt sich einfach an einer Grundplatte anbringen, die als passive Komponente nur die verschiedenen Strömungswege enthält und an der die Endverschraubungen mit den weiteren Verrohrungen angeordnet sind. Im Schadensfall oder für Wartungsarbeiten lässt sich die Baueinheit einfach und ohne Lösen von Endverschraubungen von der Grundplatte abbauen. Dadurch kann auf die Förderung nach Redundanz verzichtet werden, weil z.B. der Austausch der Baueinheit innerhalb weniger Minuten möglich ist. Schäden in der nur passiven Grundplatte sind ohnedies unwahrscheinlich. Ferner vereinfacht dieses Konzept die Umstellung des Pumpenaggregats auf andere Schmierkonditionen, z.B. größere oder kleinere Schmierdosen, weil die austauschbare Baueinheit die aktiven Komponenten enthält.

Zweckmäßig wird die Funktion des Arbeitskolbens und der Dosierkolben mit wenigstens einer Funktionsüberwachungseinrichtung geprüft, die einen Schmierstellenanschluss überwacht. Hierfür bietet sich ein durch den Schmiertakt zu bewegender Überwachungskörper an, der durch ein Schauglas und/oder einen elektronischen Sensor überwachbar ist. Alternativ oder additiv kann auch ein elektronischer Strömungssensor eingebaut sein.

Im Gehäuse sind getrennte Entlüftungseinrichtungen für den Steuerölkreis und den Schmierölkreis vorgesehen. Es lässt sich jeder Kreis gesondert entlüften. Die Entlüftungseinrichtungen greifen dort ein, wo Lufteinschlüsse am wirksamsten zu entfernen sind, d.h. direkt beim Arbeitskolben oder direkt bei den Dosierkolben.

Das Pumpenaggregat besteht aus wenigen, baukastenartig kombinierten, einzeln auswechselbaren Komponenten, wobei durch die Schlitzsteuerung der Dosierzylinder störungsanfällige und teure Ansaugventile entfallen. Unter anderem wegen der Schlitzsteuerung ist das Pumpenaggregat im Schmierölkreis selbst ansaugend, was einen zusätzlichen Sicherheitsaspekt darstellt, obwohl, wie in dieser Technik üblich, das Schmieröl aus einem Hochtank bereitgestellt wird und somit einen Grunddruck von beispielsweise 1 bis 2 bar hat. Die Schlitzsteuerung bietet gegenüber Saugventilen den Vorteil, selbst sehr hochviskose Öle mit hoher Dynamik, sogar ohne Beheizung, benutzen zu können.

Für Einsatzbedingungen bei extrem niedrigen Temperaturen und/oder mit hochviskosen Ölen bietet zumindest die Grundplatte die Möglichkeit, wenigstens eine Heizpatrone unterzubringen. Gegebenenfalls ist auch das Gehäuse zum Einbringen einer Heizpatrone vorbereitet.

Eine manuelle Betätigungsvorrichtung am Steuerventil ist für einen Notfall zweckmäßig. Auch die Inbetriebnahme des Schmiersystems ohne Elektronik ist damit möglich.

Die Konzeption der Baueinheit, bei der in dem Gehäuse im Wesentlichen sämtliche aktiven Komponenten des Pumpenaggregats enthalten sind, erlaubt eine komfortable Anpassung des Pumpenaggregats an unterschiedliche Schmierkonditionen. Der Pumpenfuß mit den Dosierkolben kann gegen einen in das Gehäuse und zum Arbeitskolben passenden anderen Pumpenfuß ersetzt werden, der größer oder kleiner dimensionierte Dosierzylinder besitzt und in den größer oder kleiner dimensionierte Dosierkolben eingesetzt werden.

Eine zweite, die gleiche Grundplatte nutzende Baueinheit mit einem zweiten Steuerventil lässt Redundanz-Anforderungen bequem und mit verringertem Bauaufwand erfüllen.

Anhand der Zeichnung werden Ausführungsformen des Erfindungsgegenstandes erläutert. Es zeigen:
- Fig. 1: eine schematische Darstellung eines Teils eines Zylinderschmiersystems eines Verbrennungsmotors, beispielsweise eines Dieselmotors,
- Fig. 2: eine Seitenansicht des Schmierpumpenaggregats, wie es in Fig. 1 verwendet wird,
- Fig. 3: einen zur Zeichenebene parallelen Längsschnitt des Pumpenaggregats von Fig. 2,
- Fig. 4: eine gegenüber der Schnittansicht von Fig. 3 gedrehte Vertikalschnittansicht,
- Fig. 5: in der linken und in der rechten Hälfte weitere Teil-Vertikalschnittansichten, und
- Fig. 6: ein Blockschaltbild des Steuerölkreises des Pumpenaggregats der Fig. 2 bis 5.

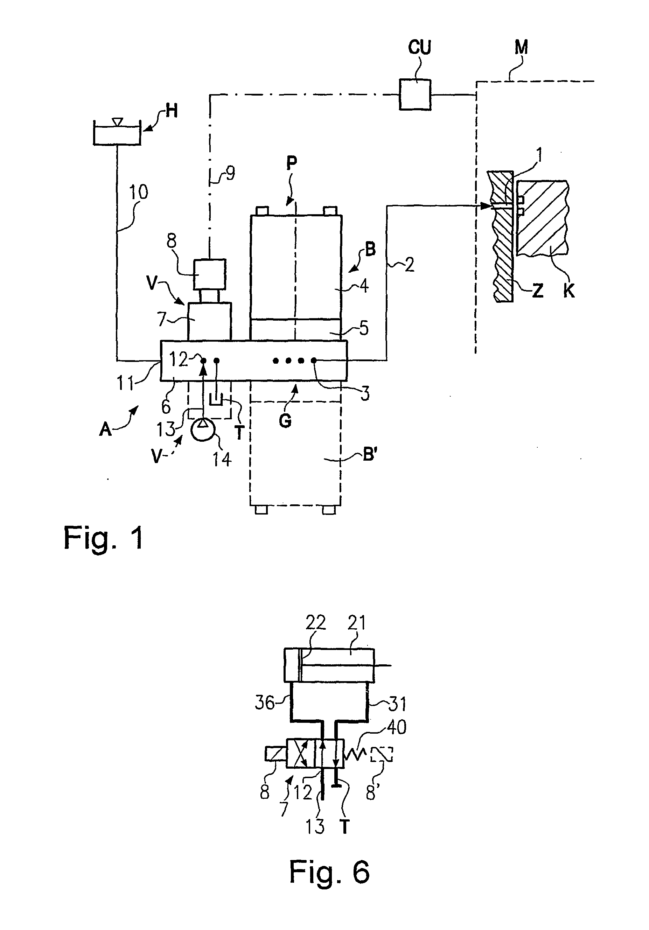

Ein Teil eines Zylinderschmiersystems A eines Verbrennungsmotors M, z.B. eines Dieselmotors, dient in Fig. 1 zur Ölschmierung mehrerer Zylinderschmierstellen 1 des Motors M, von denen eine dargestellt ist. In der Zylinderschmiereinrichtung A ist ein Pumpenaggregat P vorgesehen, das zum taktgenauen Schmieren ausgelegt ist. Damit ist gemeint, dass der Schmierstoff, in diesem Fall Schmieröl, taktgenau in eine vom Motorenmanagement CU bestimmbare Kolbenhubphase des Kolbens K dosiert wird, beispielsweise dann, wenn die Kolbenringe des Kolbens K die Schmierstelle 1 erreichen, oder kurz davor oder kurz danach, oder wenn Kolbenhubabhängig ein Kolbenkühlbereich mit der Schmierstelle 1 ausgerichtet ist. Dabei lässt sich das Schmierpumpenaggregat P, z.B. über das Motormanagement CU, sehr präzise steuern, so dass bei jedem Kolbentakt mindestens einmal geschmiert wird oder nur bei ausgewählten Kolbentakten. Speziell bei Volllast des Motors M kann sich eine sehr hohe Schmiertaktfrequenz ergeben.

An die Schmierstelle 1 ist über eine Schmierleitung 2 ein Schmierstellenanschluss 3 des Schmierpumpenaggregats P angeschlossen. Im Schmierpumpenaggregat P bildet ein Gehäuse 4 zusammen mit einem Pumpenfuß 5 und darin enthaltenen, später erläuterten, aktiven Komponenten eine vorfertigbare Baueinheit B, die auf einer Grundplatte G in Form eines Blocks 6 austauschbar angeordnet ist. Endverschraubungen und die Schmierstellenanschlüsse sowie Anschlüsse für das Steueröl sind ausschließlich in und an der Grundplatte G vorgesehen. Ferner ist an der Grundplatte G ein Steuerventil 7 mit einem Schaltmagneten 8 angebracht, der über eine Steuerleitung 9 beispielsweise mit dem Motormanagement CU verbunden ist. Das Schmieröl wird in einem Hochtank H bereitgehalten, der über eine Leitung 10 an einen Anschluss 11 der Grundplatte G angeschlossen ist. Steueröl wird beispielsweise über eine Versorgungspumpe 14 und eine Leitung 13 zum Druckanschluss 12 der Grundplatte G gebracht, an die auch ein Rücklauf oder Tank T für das Steueröl angeschlossen ist. An der Grundplatte kann zur Sicherheit (Redundanz-Anforderungen) eine zweite Baueinheit B' mit zweitem Steuerventil V' angebracht sein. Die Grundplatte G, 6 ist entsprechend ausgestattet. Bei Nichtbenützen dieser Option kann diese Seite der Grundplatte durch eine nicht gezeigte Blindplatte abgedeckt sein.

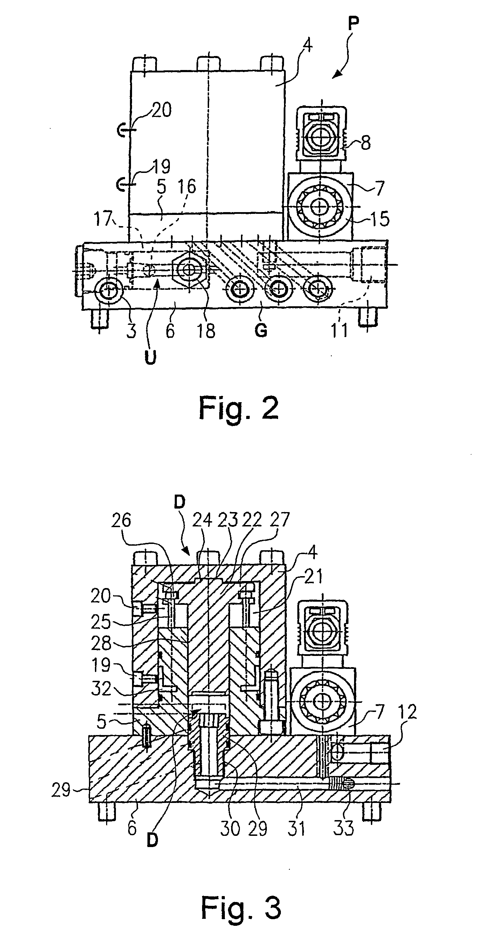

In der Seitenansicht des Schmierpumpenaggregats P von Fig. 2 ist zu sehen, dass im Gehäuse 4 seitlich getrennte Entlüftungseinrichtungen 19, 20, z.B. Entlüftungsschrauben, vorgesehen sind, um den Schmierölkreis und den Steuerölkreis entlüften zu können. Beim Steuerventil 7 ist eine Handbetätigung 15 vorgesehen. Im Block 6 der Grundplatte G sind entsprechende Strömungswege für das Steueröl und das Arbeitsöl gebohrt und ist beispielsweise dem Schmierstellenanschluss 3 eine Funktionsüberwachungseinrichtung U zugeordnet. Hierbei wird z.B. ein beim Schmiertakt verlagerbarer Überwachungskörper 16 verwendet, der über ein oberseitiges Langloch 17 zu einem im Block 6 angeordneten Schauglaskörper 17' optisch und/oder durch einen elektronischen Sensor 18, z.B. einen Näherungssensor, elektronisch zu überwachen ist. Ggfs. wird additiv oder alternativ hier ein elektronischer Strömungssensor vorgesehen.

In der Schnittansicht in Fig. 3 ist zu sehen, dass im Gehäuse 4 eine Arbeitskammer 21 vorgesehen ist, in der sich ein Arbeitskolben 22 befindet, der über das Steuerventil 7 zu einer hin- und hergehenden Bewegung ausschließlich hydraulisch antreibbar ist.

Beide Hubendlagen des Arbeitskolbens 22 sind durch hydraulische Endlagendämpfeinrichtungen D abgesichert, beispielsweise jeweils einen Eintauchvorsprung 24 und eine Eintauchvertiefung 23.

Der Pumpenfuß 5 ist von unten in die Kammer 21 abgedichtet eingesetzt und enthält mehrere, achsparallel zum Arbeitskolben 22 um diesen gruppierte Dosierkolben 25, die mit Endteilen 26 in einen Endflansch 27 des Arbeitskolbens 22 eingehängt sind. Der Pumpenfuß 5 bildet eine Zylinderbohrung 28 für den Arbeitskolben 22.

In Fig. 3 ist die untere Endlagendämpfvorrichtung D kombiniert mit einer hohlen Hülse 29, die bei 30 im Block 6 verschraubbar ist, um die jeweils untere Endlage des Arbeitskolbens einstellbar zu definieren. In ausgezogenen Linien ist der maximale Hubweg des Arbeitskolbens mit 22 angedeutet, während gestrichelt der minimale Hubweg nach Verstellen der Hülse 29 angedeutet ist. Die Hülse bildet ferner mit umfangsseitigen Dichtungen eine wirksame Abdichtung der Stoßfuge zwischen dem Pumpenfuß 5 und dem Block 6. Zum unteren Ende der Hülse 29 verläuft im Block 6 ein Steuerölkanal 31 zum Steuerventil 7. In der Hülse 29 kann eine Blende 42 angeordnet werden.

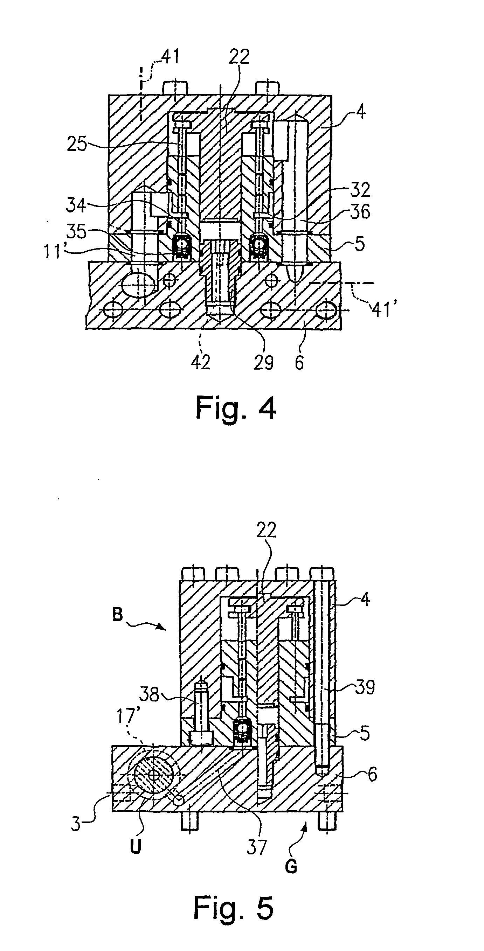

Zwischen dem Gehäuse 4 und dem Pumpenfuß 5 wird eine Ringkammer 32 begrenzt, die mit dem Schmierölanschluss 11 verbunden ist und über einzelne oder einen umlaufenden Schlitz mit in Fig. 4 sichtbaren Dosierzylindern 34 für die Dosierkolben 25 in Verbindung steht (Ansaugbereich für das Schmieröl). Im Block 6 ist der Anstich zum Steuerölkanal 31 durch einen Stopfen 33 verschlossen. Ferner ist in Fig. 3 der Druckanschluss 12 zum Steuerventil 7 gezeigt. Die Hülse 29 kann mit der Blende 42 ein Drosselorgan im Steuerölkreis bilden.

In Fig. 4 sind an den unteren Enden der Dosierzylinder 34 im Pumpenfuß 5 Druckventile 35 untergebracht. Stromab jedes Druckventils 35 verläuft ein (Fig. 5) Schmierölkanal 37 im Block 6 zum jeweiligen Schmierstellenanschluss, z.B. zum Schmierstellenanschluss 3, dessen Funktionsüberwachungseinrichtung U in Fig. 5 geschnitten angedeutet ist.

In Fig. 5 ist erkennbar, wie der Pumpenfuß 5 mit dem Gehäuse 4 durch Spannschrauben 38 zu der vorfertigbaren Baueinheit B verbunden ist, in der die Dosierkolben 25 und der Arbeitskolben 22 sowie die jeweiligen Strömungswege enthalten sind, beispielsweise ein Steuerölkanal 36 (Fig. 4) von der Grundplatte 6 zum oberen Teil der Gehäusekammer 21 des Arbeitskolbens 22. Die Baueinheit B ist mit Spannschrauben 39, die das Gehäuse 4 und den Pumpenfuß 5 durchsetzen, am Block 6 der Grundplatte G abnehmbar festgelegt.

Der in Fig. 6 angedeutete Steuerölkreis des Arbeitskolbens 22 enthält als Steuerventil V, 7 ein 4/2-Wege-Richtungssteuerventil, das durch den Schaltmagneten 8 gegen die Kraft einer Feder 40 aus der gezeigten ersten Steuerstellung in die angedeutete zweite Steuerstellung verstellt wird, und anschließend, d.h. nach Entregen des Schaltmagneten 8, durch die Feder 40 wieder in die erste Steuerstellung zurückverstellt wird. Anstelle der Feder 40 könnte auch ein gegensinnig arbeitender, zweiter Schaltmagnet 8' vorgesehen sein. In der ersten Steuerstellung ist der Druckanschluss 12, zu dem die Steuerölleitung 13 führt, direkt mit der Kolbenseite des Arbeitskolbens 22 in der Gehäusekammer 21 verbunden, während der kolbenstangenseitige Teil der Kammer 21 zum Tank T druckentlastet ist. Dies ist eine Betriebsphase entsprechend den Darstellungen in den Fig. 3, 4 und 5. In der zweiten Arbeitsstellung in Fig. 6 ist hingegen der kolbenstangenseitige Teil der Kammer 21 mit dem Druckanschluss 12 verbunden, während der kolbenseitige Teil der Kammer 21 zum Tank T entlastet ist.

Durch die Drucksteuerung wird in Fig. 4 der Arbeitskolben 22 nach unten verschoben (Förderhub), bis er an der Hülse 29 gedämpft abgefangen wird. Der Arbeitskolben 22 nimmt alle Dosierkolben 25 mit, deren jeder nach Durchgang durch den Schlitz 32 das im Dosierzylinder 34 enthaltene Schmieröl über das Druckventil 35 in seinen Schmierölkanal 37 im Block 6 und zu seinem Schmierstellenanschluss, z.B. dem Schmierstellenanschluss 3 in Fig. 5, drückt. Dabei wird der Überwachungskörper 16 in die in Fig. 2 gestrichelt angedeutete Lage verlagert, was über das Langloch 17 visuell wahrnehmbar ist, oder vom elektronischen Sensor 18 registriert wird. Das Signal des Sensors 18 wird beispielsweise zur Bestätigung registriert, um, im Falle sehr hoher Schmiertaktfrequenz, den Schaltmagneten 8 zu entregen. Das Steuerventil 7 wird umgesteuert, so dass über den Steuerölkanal 31 die untere Seite des Arbeitskolbens 22 druckbeaufschlagt und der Arbeitskolben 22 wieder in die in Fig. 4 gezeigte Ausgangslage zurückverstellt wird. Dabei führen die Dosierkolben 25 ihre Saugtakte durch, so dass die Dosierzylinder 34 wieder gefüllt sind.

Die Hülse 29 kann nach Abnehmen der Baueinheit B von der Grundplatte G, beispielsweise mittels eines Drehwerkzeugs, verschraubt werden, um die Dosierung zu ändern.

Um mit einem Grundkonzept des Schmierpumpenaggregats P unterschiedliche Schmierkonditionen abdecken zu können, lässt sich der Pumpenfuß 5 gegen einen anderen Pumpenfuß mit gleichen Außendimensionen ersetzen, der größer oder kleiner dimensionierte Dosierzylinder 34 aufweist. Dann sind auch die Dosierkolben 25 durch passende andere Dosierkolben zu ersetzen.

Es sind der Steuerölkreis und der Schmierölkreis voneinander getrennt. Die beiden Kreise können mit unterschiedlichen Ölsorten, z.B. jeweils mit optimaler Viskosität, betrieben werden.

## Patentansprüche

1. Schmierpumpenaggregat (P), insbesondere zur taktgenauen Zylinderschmierung in Verbrennungsmotoren (M) wie Dieselmotoren, mit einem Schmierstellenanschlüssen zugeordnete Dosierkolben (25) gemeinsam antreibenden Arbeitskolben (22), der über einen zur Schmieröldosierung einstellbaren Arbeitshub in Förder- und Rückholtakten hin- und hergehend antreibbar ist, und mit einem magnetbetätigten Steuerventil (V) in einem Steuerölkreis des Arbeitskolbens, **dadurch gekennzeichnet, dass** der Arbeitskolben (22) im Fördertakt und im Rückholtakt abwechselnd aus dem Steuerölkreis hydraulisch druckbeaufschlagbar ist.

2. Schmierpumpenaggregat nach Anspruch 1, **dadurch gekennzeichnet, dass** für den Arbeitskolben (22) hydraulische Hubendlagen-Dämpfvorrichtungen (D) vorgesehen sind.

3. Schmierpumpenaggregat nach Anspruch 1, **dadurch gekennzeichnet, dass** das Steuerventil (V) ein Umsteuerventil (7) ist, vorzugsweise ein 4/2-Wege-Richtungssteuerventil.

4. Schmierpumpenaggregat nach Anspruch 1, **dadurch gekennzeichnet, dass** das Steuerventil (V) aus einer ersten Steuerstellung durch einen Schaltmagneten (8) gegen Federkraft (40) in eine zweite Steuerstellung verstellbar ist.

5. Schmierpumpenaggregat nach Anspruch 1, **dadurch gekennzeichnet, dass** das Steuerventil (V) aus zwei Schaltstellungen jeweils durch einen Schaltmagneten (8, 8') verstellbar ist.

6. Schmierpumpenaggregat nach Anspruch 2, **dadurch gekennzeichnet, dass** jede hydraulisch Hubendlagen-Dämpfvorrichtung (D) zwei in der jeweiligen Hubendlage formschlüssig kooperierende Komponenten aufweist, vorzugsweise einen Eintauchvorsprung (24) am Arbeitskolben (22) oder im den Arbeitskolben enthaltenden Gehäuse (4) und eine Eintauchvertiefung (23).

7. Schmierpumpenaggregat nach Anspruch 6, **dadurch gekennzeichnet, dass** eine Komponente der Dämpfungsvorrichtung (D) ein einstellbarer Hubendanschlag ist, vorzugsweise eine verschraubbare Hülse (29).

8. Schmierpumpenaggregat nach Anspruch 7, **dadurch gekennzeichnet, dass** die Hülse (29) eine, vorzugsweise austauschbare, Blende (42) enthält.

9. Schmierpumpenaggregat nach wenigstens einem der vorhergehenden. Ansprüche, **dadurch gekennzeichnet, dass** das Gehäuse (4) des Arbeitskolbens mit einem Förderzylinder (34) und Auslassventile (35) enthaltenden Pumpenfuß (5) und die achsparallel um den Arbeitskolben (22) gruppierten Dosierkolben (25) eine vorfertigbare, trennbare Baueinheit (B) des Pumpenaggregats mit eingeformten Schmieröl- und Steuerölkanälen bildet.

10. Schmierpumpenaggregat nach Anspruch 9, **dadurch gekennzeichnet, dass** die Baueinheit (B) abnehmbar an einer Grundplatte (G, 6) angeordnet ist, die die Schmierstellenanschlüsse, einen Tragbereich für das Steuerventil (V), verbindende Steueröl- und Schmierölkanäle, Steuerdruck- und -tankanschlüsse und sämtliche Ein- und Ausgangsverschraubungen aufweist.

11. Schmierölpumpenaggregat nach Anspruch 1, **dadurch gekennzeichnet, dass** der Arbeitskolben (22) innerhalb der achsparallel um den Arbeitskolben (22) gruppierter Dosierkolben (25) und im Wesentlichen innerhalb der axialen Erstreckung der Dosierkolben angeordnet ist.

12. Schmierpumpenaggregat nach wenigstens einem der vorhergehenden Ansprüche, **dadurch gekennzeichnet, dass** in der Grundplatte (G, 6) zumindest einem Schmierstellenanschluss (3) wenigstens eine optische und/oder elektronische Funktionsüberwachungseinrichtung (U) zugeordnet ist, vorzugsweise mit einem beweglichen Überwachungskörper (16) und einem Schauglaskörper (17') und/oder einem elektrischen Positionssensor (18) wie einem Näherungssensor oder/und einem Strömungssensor.

13. Schmierpumpenaggregat nach wenigstens einem der vorhergehenden Ansprüche, **dadurch gekennzeichnet, dass** im Gehäuse (4) getrennte Entlüftungseinrichtungen (19, 20) für den Steueröl- und den Schmierölkreis vorgesehen sind.

14. Schmierpumpenaggregat nach wenigstens einem der vorhergehenden Ansprüche, **dadurch gekennzeichnet, dass** die Dosierzylinder (34)saugseitig schlitzgesteuert und an eine zwischen dem Gehäuse (4) und dem Pumpenfuß (5) begrenzte Ringkammer (32) angeschlossen sind, die vom Steuerölkreis getrennt ist.

15. Schmierpumpenaggregat nach wenigstens einem der vorhergehenden Ansprüche, **dadurch gekennzeichnet, dass** in der Grundplatte (G, 6) eine Aufnahme (41') für eine Heizpatrone vorgesehen ist.

16. Schmierpumpenaggregat nach Anspruch 1, **dadurch gekennzeichnet, dass** das Steuerventil (V, 7) eine manuelle Betätigungsvorrichtung (15) aufweist.

17. Schmierpumpenaggregat nach wenigstens einem der vorhergehenden Ansprüche, **dadurch gekennzeichnet, dass** der Baueinheit (B) mehrere identisch dimensionierte Pumpenfüße (5) mit unterschiedlich dimensionierten Dosierzylindern (34) und Dosierkolbensätzen (25) angehören.

18. Schmierpumpenaggregat nach wenigstens einem der Ansprüche 1 bis 17, **dadurch gekennzeichnet, dass** an der Grundplatte (G, 6) eine zweite Baueinheit (B') und ein zweites Steuerventil (V') funktionsbereit angeordnet und an den Steueröl- und den Schmierölkreis angeschlossen sind, vorzugsweise an der der ersten Baueinheit (B) abgewandten Seite der Grundplatte (G, 6).

## Claims

1. Lubricating pump unit (P), in particular for stroke-accurate cylinder lubrication in internal combustion engines (M) such as diesel engines, having a working piston (22), which jointly drives metering pistons (25) associated with lubricating-point ports and which is drivable so as to reciprocate in delivery- and return strokes over a working travel that is adjustable for the metering of lubricating oil, and having a magnet-actuated control valve (V) in a control-oil circuit of the working piston, **characterized in that** the working piston (22) in the delivery stroke and in the return stroke is alternately loadable with hydraulic pressure from the control-oil circuit.

2. Lubricating pump unit according to claim 1, **characterized in that** for the working piston (22) hydraulic end-of-travel damping devices (D) are provided.

3. Lubricating pump unit according to claim 1, **characterized in that** the control valve (V) is a reversing valve (7), preferably a 4/2-way directional control valve.

4. Lubricating pump unit according to claim 1, **characterized in that** by means of an actuating magnet (8) the control valve (V) is displaceable counter to a spring force (40) from a first control position into a second control position.

5. Lubricating pump unit according to claim 1, **characterized in that** the control valve (V) is displaceable from two positions in each case by means of an actuating magnet (8, 8').

6. Lubricating pump unit according to claim 2, **characterized in that** each hydraulic end-of-travel damping device (D) comprises two components that cooperate positively in the respective end-of-travel position, preferably an engagement projection (24), which is disposed on the working piston (22) or in the housing (4) containing the working piston, and an engagement recess (23).

7. Lubricating pump unit according to claim 6, **characterized in that** one component of the damping device (D) is an adjustable end-of-travel stop, preferably a threaded sleeve (29).

8. Lubricating pump unit according to claim 7, **characterized in that** the sleeve (29) contains a, preferably exchangeable, diaphragm (42).

9. Lubricating pump unit according to at least one of the preceding claims, **characterized in that** the housing (4) of the working piston, with a pump foot (5) containing a delivery cylinder (34) and outlet valves (35), and the metering pistons (25) grouped paraxially around the working piston (22) forms a structural unit (B) of the pump unit with integrally formed lubricating-oil and control-oil channels that is capable of prefabrication and separable.

10. Lubricating pump unit according to claim 9, **characterized in that** the structural unit (B) is disposed removably on a base plate (G, 6), which comprises the lubricating-point ports, a support region for the control valve (V), connecting control-oil and lubricating-oil channels, control-pressure and tank ports and all of the inlet and outlet screw connections.

11. Lubricating pump unit according to claim 1, **characterized in that** the working piston (22) is disposed inside the metering pistons (25), which are grouped paraxially around the working piston (22), and substantially within the axial extent of the metering pistons.

12. Lubricating pump unit according to at least one of the preceding claims, **characterized in that** in the base plate (G, 6) there is associated with at least one lubricating-point port (3) at least one optical and/or electronic function-monitoring device (U), preferably comprising a movable monitoring body (16) and an inspection glass body (17') and/or an electric position sensor (18) such as a proximity sensor or/and a flow detector.

13. Lubricating pump unit according to at least one of the preceding claims, **characterized in that** in the housing (4) separate vent devices (19, 20) are provided for the control-oil circuit and the lubricating-oil circuit.

14. Lubricating pump unit according to at least one of the preceding claims, **characterized in that** the metering cylinders (34) are slot-controlled at the suction side and connected to an annular chamber (32), which is delimited between the housing (4) and the pump foot (5) and is separate from the control-oil circuit.

15. Lubricating pump unit according to at least one of the preceding claims, **characterized in that** in the base plate (G, 6) a receiver (41') for a heating cartridge is provided.

16. Lubricating pump unit according to claim 1, **characterized in that** the control valve (V, 7) has a manual actuating device (15).

17. Lubricating pump unit according to at least one of the preceding claims, **characterized in that** a plurality of identically dimensioned pump feet (5) with differently dimensioned metering cylinders (34) and metering piston sets (25) belong to the structural unit (B).

18. Lubricating pump unit according to at least one of claims 1 to 17, **characterized in that** on the base plate (G, 6) a second structural unit (B') and a second control valve (V') are disposed ready for operation and are connected to the control-oil circuit and the lubricating-oil circuit, preferably at the side of the base plate (G, 6) remote from the first structural unit (B).

## Revendications

1. Organe de pompe de lubrification (P), en particulier pour lubrifier à une cadence précise, des cylindres dans les moteurs à combustion (M) tels que les moteurs diesel, avec, commandant conjointement des pistons de dosage (25) affectés à des raccordements de points de dosage, un piston de travail (22) qui est commandable en va-et-vient par une impulsion d'aller et une impulsion de retour, sur une course de travail réglable, pour le dosage du lubrifiant, et avec une électrovanne de commande (V) actionnée par un aimant dans le circuit d'huile de commande du piston de travail, **caractérisé en ce que** le piston de travail (22) peut être soumis à une pression hydraulique à partir du circuit d'huile de commande alternativement pendant l'impulsion d'aller et pendant l'impulsion de retour.

2. Organe de pompe de lubrification selon la revendication 1, **caractérisé en ce que** pour le piston de travail (22) sont prévus des dispositifs d'amortissement de fin de course (D) hydrauliques.

3. Organe de pompe de lubrification selon la revendication 1, **caractérisé en ce que** l'électrovanne de commande (V) est une électrovanne d'inversion (7), de préférence un distributeur 4/2 de commande de direction.

4. Organe de pompe de lubrification selon la revendication 1, **caractérisé en ce que** l'électrovanne de commande (V) peut être déplacée d'une première position de travail à une deuxième position de travail, à l'aide d'un électro-aimant de commande (8) en s'opposant à la force d'un ressort (40).

5. Organe de pompe de lubrification selon la revendication 1, **caractérisé en ce que** l'électrovanne de commande (V) peut être déplacée depuis deux positions de travail par respectivement un électro-aimant de commande (8, 8').

6. Organe de pompe de lubrification selon la revendication 2, **caractérisé en ce que** chaque dispositif d'amortissement de fin de course (D) hydraulique comporte deux composants coopérant par complémentarité de forme dans chaque position de fin de course, de préférence un tenon d'immersion (24) sur le piston de travail (22) ou dans le boîtier (4) renfermant le piston de travail, et une cavité d'immersion (23).

7. Organe de pompe de lubrification selon la revendication 6, **caractérisé en ce qu'**une composante du dispositif d'amortissement de fin de course (D) est une butée de fin de course réglable, de préférence un manchon (29) vissable.

8. Organe de pompe de lubrification selon la revendication 7, **caractérisé en ce que** le manchon (29) contient un diaphragme (42), de préférence interchangeable.

9. Organe de pompe de lubrification selon au moins l'une des revendications précédentes, **caractérisé en ce que** le boîtier (4) du piston de travail avec un pied de pompe (5), comportant des cylindres d'alimentation (34) et des vannes de sortie (35) et les pistons de dosage (25) parallèles à l'axe, groupés autour du piston de travail (22), forment un module (B) de l'organe de pompe de lubrification préconfectionnable, séparable, avec des canaux d'huile de graissage et d'huile de commande usinés en creux.

10. Organe de pompe de lubrification selon la revendication 9, **caractérisé en ce que** le module (B) est disposé de manière amovible sur une platine (G, 6) qui comprend les raccordements de points de graissage, une partie support pour l'électrovanne de commande (V), des canaux d'huile de commande et d'huile de graissage se raccordant, des raccordements pour la pression de commande et le remplissage et tous les raccords vissés d'entrée et de sortie.

11. Organe de pompe de lubrification selon la revendication 1, **caractérisé en ce que** le piston de travail (22) est disposé à l'intérieur des pistons de dosage (25) parallèles à l'axe, groupés autour du piston de travail (22) et sensiblement dans les limites de l'extension axiale des pistons de dosage.

12. Organe de pompe de lubrification selon au moins l'une des revendications précédentes, **caractérisé en ce que** dans la platine (G, 6) est affecté à au moins un raccordement de point de graissage (3), au minimum un dispositif de surveillance fonctionnelle (U) optique et/ou électronique, de préférence avec un corps de surveillance (16) mobile et un système de niveau en verre (17') et/ou un capteur de position (18) électrique ainsi qu'un capteur de proximité et/ou un capteur de flux.

13. Organe de pompe de lubrification selon au moins l'une des revendications précédentes, **caractérisé en ce que** dans le boîtier (4) sont prévus des dispositifs de purge (19, 20) séparés pour le circuit d'huile de commande et le circuit d'huile de graissage.

14. Organe de pompe de lubrification selon au moins l'une des revendications précédentes, **caractérisé en ce que** les cylindres de dosage (34) sont commandés par fente côté aspiration et sont raccordés à une chambre annulaire (32) délimitée entre le boîtier (4) et le pied de pompe (5), séparée du circuit d'huile de commande.

15. Organe de pompe de lubrification selon au moins l'une des revendications précédentes, **caractérisé en ce que** dans la platine (G, 6) est prévu un logement (41') pour une cartouche chauffante.

16. Organe de pompe de lubrification selon la revendication 1, **caractérisé en ce que** l'électrovanne de commande (V, 7) comporte un dispositif d'actionnement manuel (15).

17. Organe de pompe de lubrification selon au moins l'une des revendications précédentes, **caractérisé en ce que** le module (B) comprend plusieurs pieds de pompe (5) dimensionnés de manière identique avec des cylindres de dosage (34) et des jeux de pistons de dosage (25) dimensionnés différemment.

18. Organe de pompe de lubrification selon au moins l'une des revendications 1 à 17, **caractérisé en ce que** sur la platine (G, 6) sont disposés un second module (B') et une seconde électrovanne de commande (V') prêts à fonctionner et raccordés aux circuits d'huile de commande et d'huile de graissage, de préférence sur le côté opposé au premier module (B) de la platine (G, 6).
